(19) Europäisches Patentamt

European Patent Office

Office européen des brevets

(11) **EP 1 450 029 A1**

(12) **EUROPEAN PATENT APPLICATION**

(43) Date of publication:
**25.08.2004 Bulletin 2004/35**

(51) Int Cl.[7]: **F02D 41/40**, F02D 41/14,
F02D 41/24

(21) Application number: **04075349.3**

(22) Date of filing: **03.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **21.02.2003 FR 0302207**

(71) Applicant: **Delphi Technologies, Inc.**
**Troy, MI 48007 (US)**

(72) Inventors:
• **Du Faux, Henri M.A.F.**
**Habay-la-Vieille 6723 (BE)**

• **Voncken, Claude A.**
**Itzig, 5954 (LU)**

(74) Representative: **Denton, Michael John**
**Delphi European Headquarters,**
**64 avenue de la Plaine de France,**
**Paris Nord II,**
**BP 60059,**
**Tremblay-en-France**
**95972 Roissy Charles de Gaulle Cédex (FR)**

(54) **Process for adjusting the electrical pulse for controlling an injector**

(57) Process for adjusting the duration of the minimum electrical pulse MDPi for controlling the opening of a fuel injector in each cylinder i of a diesel engine under at least a predetermined pressure P. The control unit of the engine sends to the injector a series N of successive pulsed electrical signals and then measures the number Ci of combustions obtained in response for each cylinder, an iterative adjustment of the duration of the minimum electronic control pulse MDPi being performed by the control unit if:

$$Ci/N > Lmax$$

or if:

$$Ci/N < Lmin$$

in which: $0.65 \leq Lmax \leq 0.75$; and
$0.25 \leq Lmin \leq 0.35$
in order to keep the value Ci/N in the interval delimited by Lmax and Lmin.

EP 1 450 029 A1

**Description**

Technical Field

The present invention relates to processes for adjusting the minimum duration of the electrical pulse required to control the opening of a fuel injector in a cylinder of an engine, for example diesel, in particular to perform pilot injections.

Background of the Invention

Currently, in diesel engines, the trend is to have recourse in the majority of cases to pilot injections which precede the main injections and which improve the running of the engine, in particular by reducing its running noise, optimising its consumption and reducing gas emissions into the atmosphere. These pilot injections represent a very small quantity of fuel, around 1 $mm^3$, and consequently generate combustion which is more difficult to measure. However, the multiple advantages which they bring mean that there must be regular verification of their existence, which verification is scarcely easy as, in combustion terms, their effects are not comparable to those which result from the main injection.

Up to now, the solutions employed rest for example on the existence of pressure sensors arranged inside each cylinder, for example in the position of the glow plug.

Alternatively, detection of combustion can be effected by means of an accelerometer placed on the engine block, for example between two cylinders, which emits a signal processed by the central electronic unit of the vehicle. This processing can be performed in the following manner: the signal from the accelerometer is only retained for two distinct periods of each running cycle associated with the cylinder, a period situated around top dead centre, and in which combustion is consequently situated, and a period situated rather close to bottom dead centre. The said signals are integrated and their ratio is compared with a threshold beyond which it is considered that combustion has indeed taken place.

Summary of the Invention

These two solutions provide less accurate results than the processes of the invention which, it should however be noted, are made possible by the relatively recent implementation of ionic detection inside cylinders. Moreover, the process employed within the framework of the invention is substantially less expensive than the solution based on pressure sensors, much more accurate, and furthermore in a much wider running interval than the solution employing an accelerometer.

In accordance with a first possibility, the process of the invention, intended as mentioned to adjust the duration of the minimum electrical pulse MDPi for controlling the opening of the fuel injector of each cylinder of a diesel engine under at least a predetermined pressure P, is characterised principally by the fact that the control unit of the engine sends to the injector a series N of successive pulsed electrical signals and then measures the number Ci of combustions obtained in response for each control cylinder, an iterative adjustment of the duration of the minimum electronic control pulse MDPi being performed by the control unit if:

$$Ci/N > Lmax$$

or if:

$$Ci/N < Lmin$$

in which:

$0.65 \leq Lmax \leq 0.75$; and

$0.25 \leq Lmin \leq 0.35$

in order to keep the value Ci/N in the interval delimited by Lmax and Lmin.

In other words, the strategy employed by the process of the invention consists of performing tests performed in succession in time, each control test taking the form of a string of pulses to each injector. The philosophy of the process is consequently quasi-statistical, the strings of pulses constituting statistical sets or populations the results of which are analysed as a function of thresholds fixed as being the limits of acceptable performance for the proper operation of the engine.

Thus, if the number of combustions relative to the number of pulses sent to the injector is outside a predetermined interval, the electronic control unit of the engine performs adjustments permitting return to a value in accordance with operational criteria established with reference to the process of the invention, and electronically processable by the said control unit.

In the majority of cases, the upper threshold of the said interval Lmax is provided equal to 0.7, while the lower threshold Lmin is fixed at 0.3. In other words, it is considered, in accordance with the process of the invention, that when the number of combustions does not reach 30% of the number of pulses emitted to the address of the injector, the duration of the electrical pulse for controlling the opening ofthe said injector is too small. Conversely, when the combustion rate is greater than 70% of possible combustions relative to the number of pulsed signals sent to the injectors, it is considered that the duration of each control pulse is too great and that it is possible to optimise this value by reducing it.

In this latter case, under the majority of hypotheses, the duration of the minimum electrical pulse MDPi for control of the injector is reduced by a value of between 1 and 20 $\mu$sec.

More precisely still, the value of decrease of the duration of the pulse is preferably 4 μsec.

Under the opposite hypothesis, i.e. when in the lower part of the interval, i.e. if the number of successful combustions is lower than 30% of the number of attempts ($Ci/N < Lmin$) the duration of the minimum electrical pulse MDPi for control of the injector is this time increased by a value of between 1 and 20 μsec.

Again, preferably, the value of increase of the duration of the pulse is considered as being 4 μsec.

In accordance with a first modification, the process of the invention, implemented under these same conditions, includes an iterative reduction of the duration of the minimum electronic control pulse MDPi performed by the control unit it $Ci/N > L$, or an iterative increase in the said duration being performed if $Ci/N \leq L$, with $0.5 \leq L < 1$.

Lastly, in a second modification, the said reduction of the duration of the minimum electronic control pulse MDPi is performed by the control unit if $Ci/N = 1$, an increase in the said duration being performed if $Ci/N < 1$.

In both cases, the increase and the reduction, which are optionally iterative, take place on each occasion by a value of between 1 and 20 μsec.

For the measurements performed to have meaning, it is of course indispensable to perform injection strings which fit into particular periods of the pressure cycle within each cylinder. Thus, preferably, the pulsed electronic signals are sent to each injector in such a manner that the ensuing combustions commence at an angular position close to top dead centre.

As already indicated, the process of the invention is additionally characterised by the fact that the occurrence of a combustion is measured by ionic detection. Although the process does not depend on this detection method, it should however be stressed that under the hypothesis that it is associated with detection methods of the prior art, it would scarcely give advantages in terms of cost reduction or optimisation of electronic processing.

The said processing, performed by the electronic control unit, may moreover consist of a direct analysis of the signal, or alternatively of an integrated analysis of the signal, the latter often more faithfully portraying the reality of the measured phenomenon.

Although it is not a sine qua non condition, the process for determining the minimum duration of the signal for control of an injector which is the object of the present invention can, for example, be applied during rest phases of the engine in which the injectors are not being pushed, i.e. for example when the driver of the vehicle is not accelerating.

As it has been described, the process is of course applied to each cylinder of an engine, considered separately. From this point of view, it matters little, with regard to the process of the invention, whether its application to the different cylinders of the engine is in succession or simultaneous.

Similarly, provision may be made for the duration of the pulsed signals of a series N to be constant. Conversely, it can be possible, still without departing from the scope of the invention, to vary the duration of the said signals, which can give advantageous information about the required optimum duration of the pulse, for example by chronologically comparing the combustions obtained with the progressive variation in the duration of the signals.

A similar arrangement can be applied to pressures. In accordance with one possibility, the pressure P can be maintained constant during the sending to each injector of the series ofN pulsed signals. To increase the number of parameters measured, it is however possible, while remaining within the scope of the invention, to vary the pressure individually with the sending of the pulsed signals or from one pulse string to another. Here again, individualised comparison of each pulse/pressure pair can give advantageous information about the operation of the engine, and about the optimum predetermined duration of the electrical control pulses.

The statistical nature resulting from the application of the process of the invention was mentioned above. The number N of pulsed signals which form the statistical population or set is not consequently immaterial. For the results to be significant, this number is preferably between 10 and 20.

The invention is not, however, limited to the different examples of implementation which have been described above. On the contrary, it encompasses any other modified implementation of the process by modification of a detail within the capability of the man skilled in the art.

**Claims**

1. Process for adjusting the duration of the minimum electrical pulse MDPi for controlling the opening of a fuel injector in each cylinder i of a diesel engine under at least a predetermined pressure P, **characterised by** the fact that the control unit of the engine sends to the injector a series N of successive pulsed electrical signals and then measures the number Ci of combustions obtained in response for each cylinder, an iterative adjustment of the duration of the minimum electronic control pulse MDPi being performed by the control unit if:

$$Ci/N > Lmax$$

or if:

$$Ci/N < Lmin$$

in which:

$0.65 \leq Lmax \leq 0.75$; and

$0.25 \leq Lmin \leq 0.35$

in order to keep the value $Ci/N$ in the interval delimited by $Lmax$ and $Lmin$.

2. Adjustment process as described in the preceding claim, **characterised by** the fact that $Lmax = 0.7$.

3. Adjustment process as described in one of the preceding claims, **characterised by** the fact that $Lmin = 0.3$.

4. Adjustment process as described in any one of the preceding claims, **characterised by** the fact that, where $Ci/N > Lmax$, the duration of the minimum electrical pulse $MDPi$ for control of the injector is decreased by a value of between 1 and 20 μsec.

5. Adjustment process as described in the preceding claim, **characterised by** the fact that the value of the decrease in the duration of the pulse is 4 μsec.

6. Adjustment process as described in any one of the preceding claims, **characterised by** the fact that, where $Ci/N < Lmin$, the duration of the minimum electrical pulse $MDPi$ for control of the injector is increased by a value of between 1 and 20 μsec.

7. Adjustment process as described in the preceding claim, **characterised by** the fact that the value of the increase in the duration of the pulse is 4 μsec.

8. Process for adjusting the duration of the minimum electrical pulse $MDPi$, for controlling the opening of a fuel injector in each cylinder i of a diesel engine under at least a predetermined pressure P, **characterised by** the fact that the control unit of the engine sends a series N of successive pulsed electrical signals to the injector and then measures the number $Ci$ of combustions obtained in response for each cylinder, an iterative reduction of the duration of the minimum electronic control pulse $MDPi$ being performed by the control unit if $Ci/N > L$, an iterative increase of the said duration being performed if $Ci/N \leq L$, with $0.5 \leq L < 1$.

9. Process for adjusting the duration of the minimum electrical pulse $MDPi$, for controlling the opening of a fuel injector in each cylinder i of a diesel engine under at least a predetermined pressure P, **characterised by** the fact that the control unit of the engine sends a series N of successive pulsed electrical signals to the injector and then measures the number $Ci$ of combustions obtained in response for each cylinder, a reduction of the duration of the minimum electronic control pulse $MDPi$ being performed by the control unit if $Ci/N = 1$, an increase of the said duration being performed if $Ci/N < 1$.

10. Adjustment process as described in one of claims 8 and 9, **characterised by** the fact that the increase and the reduction, which are optionally iterative, take place on each occasion by a value of between 1 and 20 μsec.

11. Adjustment process as described in any one of the preceding claims, **characterised by** the fact that the pulsed electrical signals are sent to the injector in such a manner that the ensuing combustions commence at an angular position close to top dead centre.

12. Adjustment process as described in any one of the preceding claims, **characterised by** the fact that the occurrence of a combustion is measured by ionic detection.

13. Adjustment process as described in the preceding claim, **characterised by** the fact that the ionic detection signal is processed by the control unit by direct analysis of the said signal or by integrated analysis of the signal.

14. Adjustment process as described in any one of the preceding claims, **characterised by** the fact that it is implemented in rest phases during which the injectors are not being pushed.

15. Adjustment process as described in any one of the preceding claims, **characterised by** the fact that it is applied to all the cylinders of the engine simultaneously or in succession.

16. Adjustment process as described in any one of the preceding claims, **characterised by** the fact that the duration of the pulsed signals of a series N is constant.

17. Adjustment process as described in any one of the preceding claims, **characterised by** the fact that the pressure P is kept constant during the sending to the injector of the series N of pulsed signals.

18. Adjustment process as described in any one of the preceding claims, **characterised by** the fact that the number N of pulsed signals is between 10 and 20.

**European Patent Office**

## EUROPEAN SEARCH REPORT

Application Number

EP 04 07 5349

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99/61771 A (GLAVMO MAGNUS ;SPADAFORA PETER (LU); MECEL AB (SE); DELCO ELECTRON) 2 December 1999 (1999-12-02) * abstract; figures 3,4 * * page 1, line 30 - page 2, line 4 * * page 3, line 6 - line 8 * * page 3, line 33 - page 5, line 8 * * page 5, line 18 - page 6, line 3 * * page 7, line 36 - page 8, line 9 * --- | 1-18 | F02D41/40 F02D41/14 F02D41/24 |
| X Y | EP 0 959 237 A (LUCAS IND PLC) 24 November 1999 (1999-11-24) * abstract; figure 1 * * column 1, line 46 - line 58 * * column 3, line 35 - column 4, line 4 * --- | 1-11, 14-18 12,13 | |
| Y | EP 1 132 607 A (DELPHI TECH INC) 12 September 2001 (2001-09-12) * paragraph [0009] * * paragraph [0011] * * paragraph [0021] - paragraph [0022] * --- | 12,13 | |
| P,X | EP 1 316 709 A (BOSCH GMBH ROBERT) 4 June 2003 (2003-06-04) * column 2, line 39-43 * * column 3, line 11 - line 55 * --- | 1-18 | TECHNICAL FIELDS SEARCHED (Int.Cl.7) F02D |
| Y | EP 1 132 596 A (DELPHI TECH INC) 12 September 2001 (2001-09-12) * paragraph [0008] * * paragraph [0011] * * paragraph [0015] - paragraph [0016] * * paragraph [0033] - paragraph [0038] * --- | 1-18 | |
| Y | DE 196 39 172 A (SIEMENS AG) 2 April 1998 (1998-04-02) * the whole document * --- | 1-18 | |

-/--

The present search report has been drawn up for all claims

| Place of search | Date of completion of the search | Examiner |
|---|---|---|
| MUNICH | 7 June 2004 | Wettemann, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

**European Patent Office**

**Application Number**

EP 04 07 5349

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 416 265 A (BOSCH GMBH ROBERT) 13 March 1991 (1991-03-13) * the whole document * | 1-18 | |

TECHNICAL FIELDS SEARCHED (Int.Cl.7)

The present search report has been drawn up for all claims

| Place of search | Date of completion of the search | Examiner |
|---|---|---|
| MUNICH | 7 June 2004 | Wettemann, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 1 450 029 A1**

## ANNEX TO THE EUROPEAN SEARCH REPORT
## ON EUROPEAN PATENT APPLICATION NO.

EP 04 07 5349

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2004

| Patent document cited in search report | | | Publication date | Patent family member(s) | | | Publication date |
|---|---|---|---|---|---|---|---|
| WO 9961771 | | A | 02-12-1999 | WO | 9961771 | A1 | 02-12-1999 |
| | | | | DE | 69807532 | D1 | 02-10-2002 |
| | | | | DE | 69807532 | T2 | 16-01-2003 |
| | | | | EP | 1082533 | A1 | 14-03-2001 |
| EP 0959237 | | A | 24-11-1999 | DE | 69906861 | D1 | 22-05-2003 |
| | | | | DE | 69906861 | T2 | 04-03-2004 |
| | | | | EP | 0959237 | A2 | 24-11-1999 |
| | | | | US | 6192855 | B1 | 27-02-2001 |
| EP 1132607 | | A | 12-09-2001 | DE | 10011621 | A1 | 13-09-2001 |
| | | | | EP | 1132607 | A2 | 12-09-2001 |
| EP 1316709 | | A | 04-06-2003 | DE | 10159016 | A1 | 18-06-2003 |
| | | | | EP | 1316709 | A2 | 04-06-2003 |
| | | | | JP | 2003172187 | A | 20-06-2003 |
| | | | | US | 2003131822 | A1 | 17-07-2003 |
| EP 1132596 | | A | 12-09-2001 | DE | 10011619 | A1 | 13-09-2001 |
| | | | | EP | 1132596 | A2 | 12-09-2001 |
| DE 19639172 | | A | 02-04-1998 | DE | 19639172 | A1 | 02-04-1998 |
| EP 0416265 | | A | 13-03-1991 | DE | 3929747 | A1 | 14-03-1991 |
| | | | | DE | 59000690 | D1 | 11-02-1993 |
| | | | | EP | 0416265 | A1 | 13-03-1991 |
| | | | | JP | 3100350 | A | 25-04-1991 |
| | | | | JP | 3236915 | B2 | 10-12-2001 |
| | | | | US | 5070836 | A | 10-12-1991 |

EPO FORM P0459

For more details about this annex : see Official Journal of the European Patent Office, No. 12/82

7